(19) Europäisches Patentamt
European Patent Office
Office européen des brevets

(11) **EP 2 583 379 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(51) Int Cl.:
*H02P 6/12* *(2006.01)*      *H02P 6/18* *(2006.01)*
*H02P 25/02* *(2006.01)*

(21) Anmeldenummer: **11722450.1**

(22) Anmeldetag: **31.05.2011**

(86) Internationale Anmeldenummer:
**PCT/EP2011/058954**

(87) Internationale Veröffentlichungsnummer:
**WO 2011/157552 (22.12.2011 Gazette 2011/51)**

(54) **VERFAHREN UND VORRICHTUNG ZUR ANPASSUNG EINES DREHZAHLBEREICHS EINES ELEKTROMOTORS**

METHOD AND DEVICE FOR ADJUSTING A SPEED RANGE OF AN ELECTRIC MOTOR

PROCÉDÉ ET DISPOSITIF POUR ADAPTER UNE PLAGE DE VITESSES DE ROTATION D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.06.2010 DE 102010030240**

(43) Veröffentlichungstag der Anmeldung:
**24.04.2013 Patentblatt 2013/17**

(73) Patentinhaber: **BSH Hausgeräte GmbH**
**81739 München (DE)**

(72) Erfinder:
• **ABEL, Falko**
**93089 Aufhausen (DE)**

• **WEIDNER, Eberhard**
**90478 Nürnberg (DE)**

(74) Vertreter: **Richter, Harald**
**BSH Hausgeräte GmbH**
**Zentralabteilung Gewerblicher Rechtsschutz**
**Carl-Wery-Strasse 34**
**81739 München (DE)**

(56) Entgegenhaltungen:
**EP-A2- 1 109 309      JP-A- 6 307 905**
**US-A- 4 866 356      US-B1- 6 184 645**

**Beschreibung**

Die vorliegende Erfindung betrifft ein Verfahren sowie eine Vorrichtung zur Anpassung eines Drehzahlbereichs eines Elektromotors.

Bürstenlose Gleichstrommotoren, auch als BLDC-Motoren (aus dem Englischen: "brushless direct current motor") bezeichnet, werden beispielsweise als Kompressorantrieb in Kühlschränken verwendet. Aufgabe der Motorsteuerung eines BLDC-Motors ist es, die Zeitpunkte der Kommutierungen so einzustellen, dass die Bewegung des Rotors und die Phasenzeiten der angelegten Spannungen synchron und in Phase sind. Im sogenannten sensorlosen Betrieb wird die elektromotorische Kraft, EMK, bzw. Gegen-EMK des Motors gemessen und der Nulldurchgang der EMK wird bestimmt, um daraus Rückschlüsse auf die Lage des Rotors zu ziehen und auf Basis der ermittelten Lage Steuersignale zu erzeugen.

Die EMK kann mittels verschiedener Verfahren gemessen werden. Eine einfache Möglichkeit ist es, die Klemmenspannung über einen künstlichen Sternpunkt nachzubilden, an welchem die EMK nach der Demagnetisierung schaltzustandsunabhängig gemessen werden kann. Nachteilig bei diesem Verfahren ist jedoch der durch den künstlichen Sternpunkt bedingte zusätzliche Schaltaufwand und höhere Verluste.

Als Verfahren ohne zusätzlichen Sternpunkt ist es möglich, die Tatsache zu nutzen, dass innerhalb der Ausschaltzeiten der pulsweitenmodulierten Ansteuerung der Motorwicklungen, die Klemmenspannung des Motors der EMK direkt folgt. Die Ausschaltzeiten der Pulsweitenmodulation (PWM) stellen Messfenster dar, innerhalb dessen die Messungen durchgeführt werden können. Die erforderliche Größe dieser Messfenster ist durch die Geschwindigkeit des A/D-Wandlers zur Weiterverarbeitung des Messsignals bestimmt. Ferner muss vor der Messung die Demagnetisierung der Motorwicklung abgewartet werden. Es ergibt sich also ein weiteres Messfenster, welches bestimmt ist durch den Zeitpunkt der Demagnetisierung der Motorwicklung und den Zeitpunkt der darauffolgenden Kommutierung. Die für die Demagnetisierung erforderliche Zeitdauer ist jedoch lastabhängig und vergrößert sich mit dem Absolutstrom. Zwar kann die Zeitdauer der Demagnetisierung durch aktive Schaltungsmaßnahmen reduziert werden, sie bleibt aber nichtsdestotrotz lastabhängig. Aufgrund der Zeitmaßstäbe im PWM-Raster ist es schwierig, diese Lastabhängigkeit mittels Lastmessungen zu berücksichtigen.

Bei dem oben beschriebenen Ansatz ist es also erforderlich, einen Maximalwert für die Drehzahl festzulegen, welcher sicherstellt, dass die bei maximaler Last und maximaler Drehzahl vorliegenden Messfenster immer noch in einem Rahmen liegen, der eine Messung der EMK ermöglicht. Dies bedeutet aber, dass der tatsächlich mögliche Drehzahlbereich bei geringeren Lasten nicht voll ausgeschöpft wird.

Es ist auch nicht möglich, die Drehzahl bei festgelegten Messzeitpunkten über ein gewisses Maß hinaus zu steigern, da dann die Gefahr besteht; dass die Nulldurchgänge der EMK zu spät oder gar nicht erkann werden und es somit zum Kippen bzw. einer Instabilität des Motors kommt.

Die Druckschrift DE 601 24 121 T2 schlägt vor, die Spannungen in den drei Phasen des Motors abzutasten, mathematisch zu behandeln, zu einem Parameter, der proportional zu der Drehzahl des Motors ist, zu summieren, und dann miteinander zu vergleichen. Das Ergebnis dieses Vergleichs bestimmt den Kommutierungsmoment der Phasen.

Die Druckschrift DE 699 36 222 T2 offenbart ein System und ein Verfahren zum Erfasseb des Auftretens von Spitzenströmen an Elektromotoren, welches lediglich einen Stromdetektor verwendet, der auf eine bevorzugte Grenze eingestellt ist.

Die Druckschrift DE 698 03 885 T2 offenbart eine Steuerungsvorrichtung für elektrische Motoren, bei der eine Steuereinheit den Schalteinrichtungen eine Schaltfrequenz und eine Schaltdauer vorgibt, die so festgelegt sind, dass der Spannungswert, der tatsächlich an die Wicklungen angelegt ist, derjenige ist, der unabhängig vom Schaltzustand der Schalteinrichtungen der Drehzahl und dem Drehmoment entspricht, die vom Elektromotor gefordert werden.

Die Druckschrift DE 699 36 222 T2 offenbart ein System und ein Verfahren zum Schutz eines Elektromotors und dessen Ansteuerschaltung.

Aus der US 6,184,645 B1 ist ein Regler für einen Aktuator bekannt, der um eine Schwenkachse zwischen zwei Anschläge verlagert werden kann. Zur Regelung wird die back EMF verwendet.

Aus der US 4,866,356 ist ein Steuerschaltkreis für einen Gleichstrommotor bekannt, der mit Mitteln zum Abtasten einer EMF in Verbindung steht. Dabei bewirkt ein Mikrocontroller, dass die Pausendauer so lang ist, dass Messungen möglich sind.

Die JP 6 - 307905 betrifft Maßnahmen, bei einem elektromagnetischen Durchflussmesser die Geräuschentwicklung zu reduzieren und das Stör-Nutzsignalverhältnis zu verbessern.

Die EP 1 109 309 A2 D4 die sensorlose Positionsüberwachung von Reluktanzelektromotoren, bei dem eine Spitze eines Phasenstromes erfasst, und daraus die Rotorposition bestimmt wird.

Es ist somit eine Aufgabe der vorliegenden Erfindung, ein Verfahren und eine Vorrichtung für eine Anpassung des Drehzahlbereichs eines Elektromotors bereitzustellen, mit welchen der mögliche Drehzahlbereich des Elektromotors besser ausgeschöpft werden kann, ohne dass es zu einem Kippen des Motors kommt.

Gemäß einer Ausgestaltung wird ein Verfahren nach Anspruch 1 zur Anpassung eines Drehzahlbereichs eines Elektromotors bis zu einer physikalisch maximal möglichen Drehzahl bereitgestellt, mit den folgenden Schritten:

- Durchführen einer Anzahl von Messungen einer Messgröße, die für eine elektromotorische Kraft des Elektromotors indikativ ist, innerhalb einer vorbestimmten Zeitdauer;
- Ermitteln der Anzahl der innerhalb der vorbestimmten Zeitdauer vorgenommenen Messungen,
- Anpassen eines Zählwerts in Abhängigkeit von der ermittelten Anzahl, und
- Anpassen einer maximal zulässigen Drehzahl des Elektromotors in Abhängigkeit vom ermittelten Zählwert.

Mit diesem Verfahren ist eine dynamische Anpassung des Drehzahlbereichs an die Betriebsbedingungen des Elektromotors möglich, so dass bei unterschiedlichen Lasten der Drehzahlbereich optimal ausgenutzt werden kann.

Die Messungen der Messgröße können jeweils innerhalb der vorbestimmten Zeitdauer durchgeführt werden, bis ein Kriterium zur Erkennung eines Nulldurchgangs der elektromotorischen Kraft erfüllt ist. Auf Basis des somit erkannten Nulldurchgangs der elektromotorischen Kraft kann somit die nächste Kommutierung veranlasst werden.

Das Verfahren kann weiterhin folgende Schritte aufweisen:

- Inkrementieren des Zählwerts eines Ereignisauftrittszählers, falls die ermittelte Anzahl von Messungen einen ersten Grenzwert unterschreitet,
- Dekrementieren oder Zurücksetzen des Zählwerts des Ereignisauftrittszählers, falls die ermittelte Anzahl von Messungen den ersten Grenzwert überschreitet, und
- Anpassen der maximal zulässigen Drehzahl in Abhängigkeit vom Zählwert des Ereignisauftrittszählers.

Genauer gesagt kann die maximal zulässige Drehzahl reduziert werden, falls der Zählwert des Ereignisauftrittszählers einen zweiten Grenzwert überschreitet, und die maximal zulässige Drehzahl kann vergrößert werden, falls der Zählwert des Ereignisauftrittszählers einen zweiten Grenzwert nicht überschreitet. Würde die maximale Drehzahl stets dekrementiert bzw. verringert werden, falls die ermittelte Anzahl von Messungen einen bestimmten kritischen Wert unterschreitet, und inkrementiert bzw. vergrößert werden, falls die ermittelte Anzahl von Messungen diesen kritischen Wert überschreitet, dann würde das System leicht in Schwingungen um diesen kritischen Wert geraten. Ferner ist es mit diesen zusätzlichen Verfahrensschritten möglich, den Drehzahlbereich des Elektromotors noch mehr auszuweiten, da die Drehzahl erst dann reduziert wird, wenn die Anzahl der Messungen pro elektrischer Periode dauerhaft und nicht nur einmalig unter den ersten Grenzwert fällt.

Es ist auch möglich vorzusehen, dass die maximal zulässige Drehzahl nur unter der Bedingung vergrößert wird, dass die ermittelte Anzahl von Messungen einen dritten Grenzwert überschreitet, der größer ist als der erste Grenzwert. Auf diese Weise wird eine Hysterese vorgesehen, welche Schwingungen des Systems verhindert oder zumindest dämpft. Somit erfolgt ein langsames Herantasten an das größtmögliche Drehmoment, bei welchem der Motor gerade noch nicht kippt.

Es ist auch möglich vorzusehen, dass die maximal zulässige Drehzahl nur unter der Bedingung vergrößert wird, dass der Zählwert des Ereignisauftrittzählers den zweiten Grenzwert für eine vorgegebene Zeitdauer nicht überschreitet.

Der Ereignisauftrittzähler kann beispielsweise durch ein Zurücksetzen des Zählwerts des Ereignisauftrittzählers auf Null zurückgesetzt werden.

Die Messgröße kann beispielsweise eine Klemmenspannung des Elektromotors sein. Die Klemmenspannung des Elektromotors ist zur Feststellung des Nulldurchgangs der Gegen-EMK geeignet, da ihr Verlauf abschnittsweise dem Verlauf der Gegen-EMK entspricht.

Der Elektromotor kann beispielsweise als Synchronmotor, insbesondere als bürstenloser Gleichstrommotor ausgebildet sein. Dabei kann die vorbestimmte Zeitdauer einer elektrischen Periode des Elektromotors entsprechen. Alternativ dazu kann die vorbestimmte Zeitdauer mindestens einem Messfenster zwischen Demagnetisierung und Kommutierung eines Wicklungsstrangs des Elektromotors enstprechen.

Die Anzahl der Messungen zur Erkennung des Nulldurchgangs einer steigenden Flanke der Gegen-EMK und die Anzahl der Messungen zur Erkennung des Nulldurchgangs einer fallenden Flanke der Gegen-EMK kann mit separaten Zählern gezählt werden, deren Zählwerte anschließend aufsummiert werden. Dabei können die Zählwerte der Zähler gewichtet summiert werden. Somit ist es möglich, qualitative Unterschiede in den Messungen bei steigender und fallender Flanke zu berücksichtigen.

Die elektromotorische Kraft ist insbesondere eine bei Drehung des Elektromotors in einer der Wicklungsstränge induzierte Gegen-EMK.

Eine Vorrichtung zur Anpassung eines Drehzahlbereichs eines Elektromotors, welche eingerichtet ist, das oben beschriebene Verfahren durchzuführen, kann beispielsweise als Motorsteuerung ausgebildet sein. Diese Vorrichtung wird durch die Merkmale des Anspruchs 15 definiert.

Der Elektromotor kann beispielsweise als Antrieb für einen Kompressor, insbesondere in einem Kältegerät, verwendet werden. Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Weitere Merkmale und Vorteile der Erfindung ergeben sich aus der nachfolgenden Beschreibung von Ausführungsbeispielen unter Bezugnahme auf die beigefügten Figuren. Dabei zeigen

Fig. 1 ein Ersatzschaltbild eines Elektromotors 100, welcher als bürstenloser Gleichstrommotor bzw. BLDC-Motor ausgebildet ist;

Fig. 2 einen Graphen, welcher schematisch den Signalverlauf von Motorstrom und Gegen-EMK sowie die Schaltzustände der Schalter T1 bis T6 darstellt;

Fig. 3 diagrammatisch den Verlauf der Klemmenspannung an einem Wicklungsstrang, der im Wicklungsstrang induzierten Gegen-EMK, sowie dem Wicklungsstrom durch den Wicklungsstrang;

Fig. 4 ein Diagramm, welches einen Strommodus und einen Spannungsmodus illustriert;

Fig. 5 ein Flussdiagramm eines Verfahrens zur Anpassung des Drehzahlbereichs des Elektromotors.

Falls nichts anderes angegeben ist, bezeichnen gleiche Bezugszeichen in den Figuren gleiche oder funktionsgleiche Elemente.

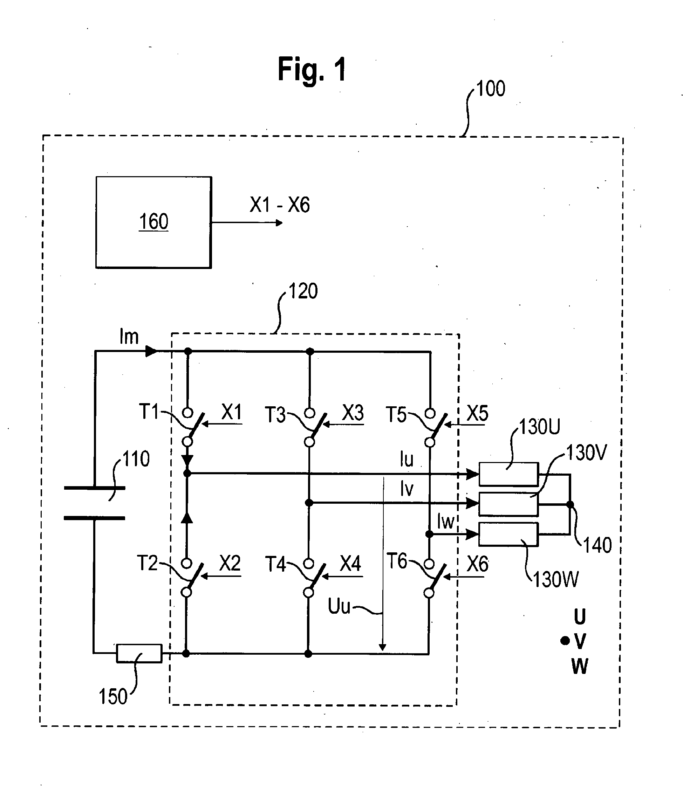

Fig. 1 zeigt ein Ersatzschaltbild eines Elektromotors 100, welcher als bürstenloser Gleichstrommotoren bzw. BLDC-Motor ausgebildet ist und beispielsweise als Kompressorantrieb in einem Kühlschrank verwendet werden kann. Der Elektromotor 100 weist eine Spannungsversorgung 110, eine Wechselrichterbrücke 120, drei Motorwicklungen bzw. Wicklungsstränge 130U, 130V, 130W und eine Motorsteuerung 160 auf.

Die Spannungsversorgung 110 stellt eine Zwischenkreisspannung zwischen einem Zwischenkreisversorgungspotential und einer Zwischenkreismasse bereit. Die Wechselrichterbrücke 120 weist sechs Schalter T1 bis T6 auf, welche in Form einer B6-Brücke angeordnet sind und die Wicklungsstränge 130U, 130V und 130W mit Strom versorgen. Genauer sind jeweils zwei Schalter T1 und T2, T3 und T4 bzw. T5 und T6 in Reihe zwischen dem Zwischenkreisversorgungspotential und der Zwischenkreismasse angeschlossen. Die Knoten zwischen den Schaltern T1 und T2, T3 und T4 bzw. T5 und T6 sind jeweils mit einer Seite der Wicklungsstränge 130U, 130V und 130W verbunden. An ihrer anderen Seite sind die Wicklungsstränge 130U, 130V und 130W mit einem Sternpunkt 140 verbunden. Ferner ist zwischen der Wechselrichterbrücke 120 und der Spannungsversorgung 110 auf Seiten der Zwischenkreismasse ein Widerstand 150 vorgesehen.

Die Schalter T1 bis T6 können beispielsweise jeweils einen Leistungstransistor und eine dazu parallel geschaltete Freilaufdiode umfassen. Die Schalter T1 bis T6 werden mittels Steuersignalen X1 bis X6 angesteuert, die von einer Motorsteuerung 160 bereitgestellt werden. Dabei werden die Wicklungsstränge 130 derart angesteuert, dass ein rotierendes Magnetfeld erzeugt wird, in welchem ein einen Permanentmagneten umfassender Rotor rotiert. Der Elektromotor 100 ist also ein dreisträngiger Permamentmagnet-Synchronmotor, der mittels der B6-Wechselrichterbrücke 120 mit einer dreiphasigen Spannung gespeist wird.

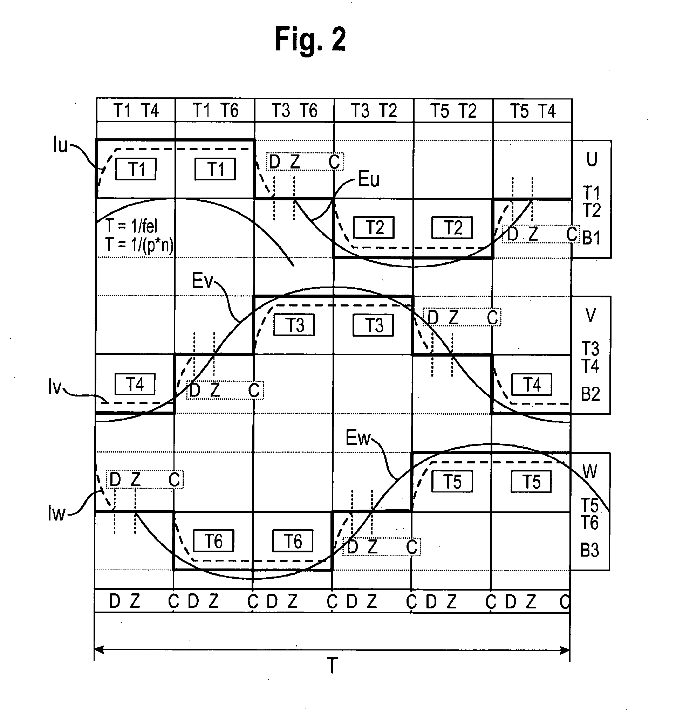

Fig. 2 ist ein Diagramm, welches schematisch den Signalverlauf von Motorstrom und Gegen-EMK sowie die Schaltzustände der Schalter T1 bis T6 darstellt. Dabei stellen die fett durchgezogenen Linien die Schaltzustände der Schalter T1 bis T6 dar, die gestrichelten Linienstellen die Wicklungsströme Iu, Iv und Iw durch die Wicklungsstränge 130U, 130V und 130W dar, und die dünnen durchgezogenen Linienstellen die Gegen-EMKs Eu, Ev, Ew dar, die in den Wicklungssträngen 130U, 130V und 130W erzeugt werden. Das Diagramm in Fig. 2 zeigt dabei den Verlauf während einer elektrischen Periode T, welche ihrerseits in sechs Teilperioden der Zeitdauer T/6 unterteilt ist, die jeweils einem 60°-Abschnitt entsprechen. Die drei Wicklungsstränge 130U, 130V und 130W werden jeweils mit einem Versatz von 120° angesteuert. Während der ersten Teilperiode sind die Schalter T1 und T4 eingeschaltet bzw. leitend geschaltet und alle übrigen Schalter ausgeschaltet bzw. nicht leitend geschaltet, so dass der Motorstrom Im durch den Wicklungsstrang 130U durch den Sternpunkt 140 über den Wicklungsstrang 130V zur Zwischenkreismasse fließt. Am Ende dieser ersten Teilperiode erfolgt eine Kommutierung vom Wicklungsstrangs 130V auf den Wicklungsstrang 130W, indem der Schalter T4 ausgeschaltet und der Schalter T6 eingeschaltet wird. Während dieser zweiten Teilperiode sind die Schalter T1 und T6 eingeschaltet, so dass der Motorstrom Im durch den Wicklungsstrang 130U durch den Sternpunkt 140 über den Wicklungsstrang 130W zur Zwischenkreismasse fließt. Am Ende dieser zweiten Teilperiode erfolgt eine zweite Kommutierung vom Wicklungsstrang 130U auf den Wicklungsstrang 130V, indem der Schalter T1 ausgeschaltet und der Schalter T3 eingeschaltet wird. Während dieser dritten Teilperiode sind die Schalter T3 und T6 eingeschaltet, so dass der Motorstrom Im durch den Wicklungsstrang 130V durch den Sternpunkt 140 über den Wicklungsstrang 130W zur Zwischenkreismasse fließt. Entsprechend diesem Muster sind also stets zwei der Wicklungsstränge 130 stromführend und der dritte Wicklungsstrang 130 stromlos. Dabei wird jeder einzelne Wicklungsstrang 130 reihum für 2 x 60° = 120° an das Zwischenkreisversorgungspotential geschaltet, dann für 60° stromlos geschaltet, dann für 2 x 60° = 120° an die Zwischenkreismasse geschaltet und dann wieder für 60° stromlos geschaltet.

Pro elektrischer Periode T werden also sechs Schaltzustände angesteuert, wobei sich die elektrischer Periode T ergibt aus

$$T = 1 / (p \times n) \qquad (1)$$

wobei n der Drehzahl und p der Polpaarzahl des Motors entspricht.

Die Motorsteuerung 160 stellt die Zeitpunkte der Kommutierungen so ein, dass die Bewegung des Rotors und die Phasenzeiten der angelegten Spannungen synchron und in Phase sind. Dabei wird aus der Gegen-EMK des Motors, also den vom Magnetfeld des Rotors in den Wicklungssträngen 130 des Stators induzierten Spannungen auf die Lage des Rotors geschlossen. Eine kennzeichnende Größe ist hierfür der Nulldurchgang der Gegen-EMK, welcher in Fig. 2 jeweils mit "Z" gekennzeichnet ist. Die Kommutierung kann beispielsweise um eine vorgegebene Zeitdauer verzögert nach dem erkannten Nulldurchgang veranlasst werden, wobei diese Zeitdauer drehzahl- und/oder lastabhängig sein kann. In Fig. 2 sind die Zeitpunkte der Kommutierung jeweils mit "C" gekennzeichnet. Ferner ist in Fig. 2 erkennbar, dass der Wicklungsstrom eine durch die Induktivität der Wicklungsspule bedingte Trägheit aufweist. So steigt der Strom Iu durch den Wicklungsstrang 130U bei Einschalten des Schalters T1 über eine bestimmte Anstiegszeitdauer an, und bei Einschalten des Schalters T1 fällt der Strom Iu ab auf Null über eine Zeitdauer, die der Demagnetisierungszeitdauer des Wicklungsstrangs 130U entspricht. Erst zum Zeitpunkt "D" ist der Wicklungsstrom auf Null abgeklungen. Die Kommutierung ist also durch die drei Ereignisse D, Z und C gekennzeichnet, also Zeitpunkt D der Demagnetisierung des zuvor Strom führenden Stranges, Zeitpunkt Z der Nulldurchgangserkennung und Zeitpunkt C der aktiv ausgelösten Kommutierung nach einer vorbestimmten Zeit.

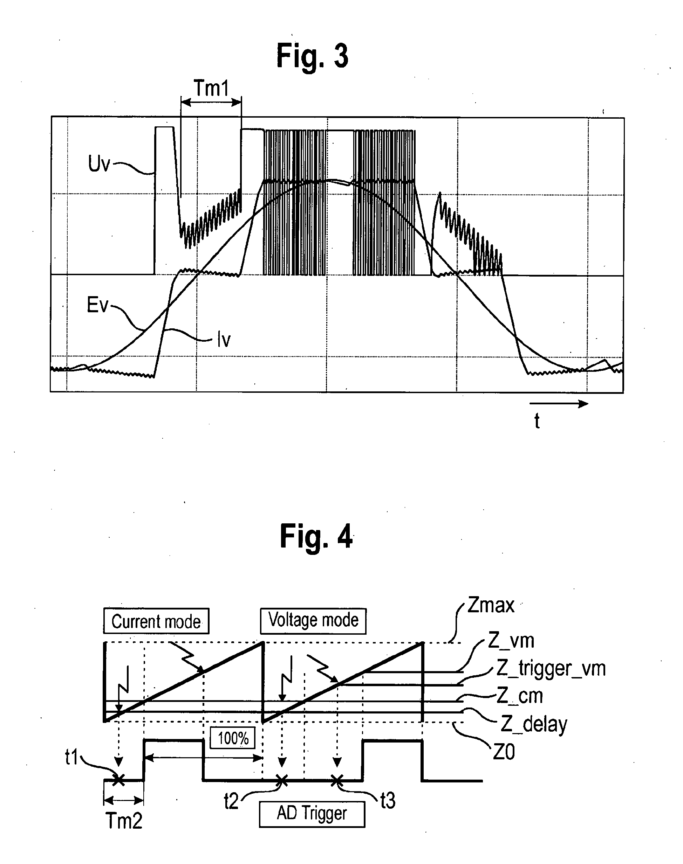

Fig. 3 zeigt diagrammatisch den Verlauf der Klemmenspannung Uv am Wicklungsstrang 130V, der im Wicklungsstrang 130V induzierten Gegen-EMK Ev, sowie dem Wicklungsstrom Iv durch den Wicklungsstrang 130V. Die Verlaufskurven wurden einer Simulation entnommen. Am Wicklungsstrom Iv sind deutlich die sechs Teilabschnitte der elektrischen Periode zu erkennen: 60° negativer Strom in Phase mit einer der beiden anderen Phasen, 60° kein Strom, 60° positiver Strom in Phase mit einer der anderen beiden Phasen, 60° positiver Strom in Phase mit der anderen der beiden anderen Phasen, 60° kein Strom und 60° negativer Strom in Phase mit der anderen der beiden anderen Phasen. Wie in Fig. 3 deutlich erkennbar ist, fließt zunächst ein Strom durch den Wicklungsstrang 130U zum Sternpunkt und über den Wicklungsstrang 130V zur Zwischenkreismasse. Mit der ersten Kommutierung wird der Schalter T4 geöffnet und die beiden Schalter T1 und T6 geschlossen. In diesem Zustand versucht die Induktivität des Wicklungsstrangs 130V den Strom Iv aufrechtzuerhalten, und dieser fließt über die Freilaufdiode des Schalters T3 zurück. Der Wicklungsstrom Iv steigt also auf Null über eine Zeitdauer, die der Demagnetisierung des Wicklungsstranges 130V entspricht. Während dieser Zeitdauer ist die Klemmenspannung Uv über die stromführende Freilaufdiode auf die Versorgungsspannung, z.B. 5 V, festgeklemmt. Nach Abklingen des Stroms durch den Wicklungsstrangs 130V fällt auch die Klemmenspannung Uv ab. Es folgt ein Zeitfenster bzw. Messfenster Tm1, währenddessen der Verlauf der Klemmenspannung Uv dem Verlauf der zu messenden Gegen-EMK entspricht. In diesem Messfenster Tm1 liegt auch ein Nulldurchgang der Gegen-EMK, welcher mit dem Verlauf der Klemmenspannung bei halber Zwischenkreisspannung zusammenfällt.

Während dem Messfenster Tm1 nimmt die Klemmenspannung eine sägezahnförmähnlichen Verlauf an. Dies liegt daran, dass in diesem Zeitraum ein Stromfluss durch die die Wicklungsstränge 130U und 130W aufgrund einer PWM-Ansteuerung der Schalter T1 und T6 stattfindet. Es werden also die Schalter T1 und T6 abwechselnd durchgeschaltet, wodurch dass Potential des Sternpunkts abwechselnd hoch in Richtung 5V und hinunter in Richtung Zwischenkreismasse gezogen wird. Eine Messung der Klemmenspannung Uv bzw. der Gegen-EMK Ev ist dabei nur zu den Zeiten möglich, zu denen der Schalter T3 ausgeschaltet ist, wie weiter unten noch erläutert werden wird.

Das Zeitfenster Tm1 endet mit einer Kommutierung, die den Wicklungsstrang 130V mit dem Zwischenkreisversorgungspotential verbindet, so dass der Wicklungsstrang 130V mit einer, wie weiter unten erläutert, pulsweitenmodulierten Spannung angesteuert wird. Nach weiteren 60° erfolgt die Kommutierung in einem der anderen beiden Stränge, so dass der Strom zu dieser Zeit eine veränderte Form aufweist. Nach weiteren 60° folgt ein weiterer stromloser Abschnitt, wobei auch hier zunächst ein Abfallen des Stroms auf Null während der Demagnetisierung zu beobachten ist, gefolgt von einem Abbild der Gegen-EMK.

Die Regelung der Energiezufuhr zu den Motorwicklungen erfolgt über eine Pulsweitenmodulation, PWM. Hierbei wird der "Dutycycle" als Maß für die relative Einschaltdauer der PWM-modulierten Klemmenspannung verwendet. Der Dutycycle ist das Verhältnis zwischen Einschaltdauer und Taktzeit und hat somit einen Wert zwischen 0% und 100%. Die PWM zur Ansteuerung des Elektromotors 100 kann im Strommodus oder im Strommodus oder im Spannungsmodus geschehen. Fig. 4 zeigt ein Diagramm, welches beide Verfahren illustriert, wobei der Strommodus in der linken Hälfte und der Spannungsmodus in der rechten Hälfte des Diagramms dargestellt ist.

Beiden Verfahren gemein ist, dass beispielsweise in der Motorsteuerung 160 ein nicht näher dargestellter Zähler Referenzwerte bzw. Zählwerte erzeugt, die von einem Ausgangswert Z0 bis zu einem Maximalwert Zmax inkrementiert werden, so dass sich über die Zeit betrachtet ein Dreiecksmuster bzw. dreiecksförmiger Verlauf ergibt.

Im Strommodus wird der Motorstrom mittels einer Komparatorschaltung im Zweipunktverfahren eingestellt. Erreicht der Zählwert des Zählers den Vergleichswert Z_cm, dann erfolgt das Einschalten der pulsweitenmodulierten Spannung. Im Strommodus ergibt sich der Dutycycle durch den Zeitpunkt der Abschaltung des PWM-Pulses durch die Ansteuerschaltung. Genauer gesagt können beispielsweise einem Stromkomparator der Soll-Strom und der momentane Ist-Strom zugeführt werden. Erreicht der Ist-Strom den Soll-Strom, dann erfolgt das Ausschalten der pulsweitenmodulierten Spannung. Fig. 3 zeigt beispielhaft eine Ansteuerung im Strommodus. Wie in Fig. 3 erkennbar ist, erfolgt die Ansteuerung des Wicklungsstranges 130V nach der zweiten Kommutierung, wobei der Ist-Strom zunächst unter dem Soll-Strom liegt, so dass ein Dutycycle von 100% vorliegt. Erreicht der Ist-Strom den Soll-Strom, dann erfolgt automatisch eine Absenkung des Dutycycles und das charakteristische PWM-Muster ist erkennbar.

Im Spannungsmodus wird dagegen von der Motorsteuerung 160 eine Sollspannung berechnet und die relative Einschaltdauer der PWM wird eingeprägt. Dies kann beispielsweise dadurch geschehen, dass die Motorsteuerung 160 einen Vergleichswert Z_vm bestimmt und mit dem aktuellen Zählwert vergleicht, wobei ein Einschalten der PWM-Spannung erfolgt, wenn der Zählwert Z größer oder gleich Z_vm und kleiner oder gleich Zmax ist.

Mit anderen Worten wird im Strommodus das Drehmoment eingeprägt und im Spannungsmodus die Drehzahl. Die Wahl des Betriebsmodus erfolgt in Abhängigkeit vom Lastverhalten und den Anforderungen an den Elektromotor 100. Je nachdem, ob hohe Drehzahlkonstanz, geringer Geräuschentwicklung, Schwingungen oder Energieeffizienz erwünscht sind, wird die entsprechende Betriebsart gewählt. Dabei kann die Betriebsart bei Einschalten des Elektromotors 100 festgelegt werden, oder auch in Abhängigkeit von den Betriebsbedingungen umgeschaltet werden. Auch eine Mischung der Betriebsarten ist möglich.

Beiden Verfahren ist ferner gemein, dass die Messung der Gegen-EMk innerhalb eines Messfensters vor der steigenden Flanke der PWM-modulierten Spannung zu erfolgen hat. Hierdurch ergibt sich ein Zeitfenster bzw. Messfenster Tm2, während dessen die Klemmenspannung Uv zu messen ist. Fig. 4 illustriert beispielhaft die Ansteuerung des Schalters T1, welcher den Stromfluss durch den Wicklungsstrang 130U bestimmt, innerhalb des Zeitfensters Tm1, wobei die linke Seite in Fig. den Strommodus illustriert. Die Zeitpunkte t1, t2 und t3 stellen mögliche Messzeitpunkte dar. Die minimale Größe dieses Messfensters Tm2 ist bestimmt durch eine Verzögerungszeit und die Geschwindigkeit des AD-Wandlers für die Messung. So wird im Strommodus nach der fallenden PWM-Flanke zunächst eine Verzögerungszeit von beispielsweise 4us abgewartet, welche dem Zählwert Z_delay entspricht. Ferner muss zwischen der Messung und der steigenden PWM-Flanke ein bestimmter Zeitraum von beispielsweise 20us vorgesehen sein, welcher der Reaktionszeit des AD-Wandlers für die Messung entspricht. Da im Strommodus die steigende PWM-Flanke feststeht, ist auch die Größe des Messfensters Tm2 festgelegt und die Messung kann stets zu einem Zeitpunkt stattfinden, der dem Zählwert Z_delay entspricht. Dagegen hängt der dem Zählwert Z_vm entsprechende Zeitpunkt der steigenden PWM-Flanke im Spannungsmodus von den Betriebsbedingungen ab, so dass das Messzeitfenster im Spannungsmodus variabel ist. Somit ist es möglich, den Messzeitpunkt, welcher dem Zählwert Z_trigger_vm entspricht, mit einem größeren "Sicherheitsabstand" von den PWM-Flanken zu setzen, z.B: zu einem Zeitpunkt, der (Z_vm - Z0) / 2 entspricht.

Wird nun bei der oben beschriebenen Regelung die Drehzahl erhöht, dann erhöht sich zum einen der Dutycycle und die in Fig. 4 dargestellten PWM-Pulse werden breiter, wobei jedoch die PWM-Taktzeit gleich bleibt. Zum anderen verkürzt sich die zur Drehzahl invers proportionale elektrische Periode T und somit auch das Messfenster Tm1, siehe Fig. 3. Im Grenzfall wird ein Zustand erreicht, in welchem das Messfenster Tm1 so kurz ist, dass nur noch eine einzige Messung der Klemmenspannung pro EMK-Flanke möglich ist. Die Kommutierung erfolgt dann in einem festgelegten Abstand nach dieser Messung. In diesem Grenzfall wird aus der Regelung somit eine Steuerung, und es besteht die Gefahr, dass der Motor kippt. Zwar ist es möglich, die maximal zulässige Drehzahl auf einen Wert festzusetzen, der auch unter extremen Lastbedingungen einen sicheren Betrieb ohne Kippen des Motors erlaubt, allerdings hat dies den Nachteil, dass der bei der tatsächlichen Last physikalisch mögliche Drehzahlbereich nicht einmal annähernd ausgenutzt wird.

Dem im Folgenden beschriebene Verfahren liegt die Idee zugrunde, die Anzahl der durchgeführten Messungen der Gegen-EMK bzw. einer für diese indikativen Messgröße zu überwachen und sicherzustellen, dass mindestens eine vorbestimmte Anzahl von Messungen durchgeführt wird, oder anders ausgedrückt, dass das in Fig. 3 dargestellte Messfenster Tm1 zwischen Demagnetisierung und Kommutierung ausreichend groß ist.

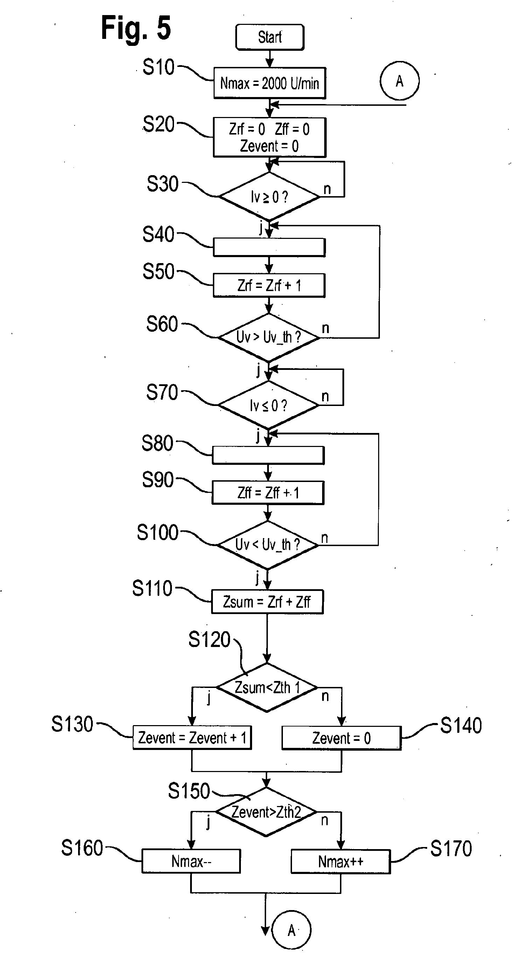

Fig. 5 zeigt ein Flussdiagramm dieses Verfahrens zur Anpassung des Drehzahlbereichs des Elektromotors 100. Im dargestellten Verfahren wird die Gegen-EMK anhand einer Messung der Klemmenspannung Uv im Wicklungsstrang 130V ermittelt, es ist aber selbstverständlich auch möglich, einen oder mehrere der anderen Wicklungsstränge heranzuziehen.

In Schritt S10 wird eine maximal zulässige Drehzahl Nmax initialisiert, vorliegend auf z.B. 2000 U/min. Diese maximal zulässige Drehzahl Nmax ist eine beispielsweise in einem Speicher im Steuergerät 160 abgelegte Variable, die durch das vorliegende Verfahren in Abhängigkeit von den momentanen Betriebsbedingungen wie z.B. der Last eingestellt wird, und die kleiner oder gleich der physikalisch möglichen maximalen Drehzahl des Motors ist. Das Steuergerät 160 regelt dabei die Drehzahl des Elektromotors 100 derart, dass die tatsächliche Drehzahl die maximal zulässige Drehzahl Nmax nicht überschreitet.

In Schritt S20 werden die Messungszähler Zrf, Zff und der Ereignisauftrittszähler Zevent auf Null initialisiert. Die Messungszähler Zrf, Zff zählen jeweils die Anzahl der durchgeführten Messungen bei steigender Flanke und fallender Flanke der Gegen-EMK. Der Ereignisauftrittszähler Zevent wird weiter unten erläutert.

In Schritt S30 wird abgewartet, dass die Demagnetisierung nach der ersten Kommutierung abgeschlossen ist, was z.B. daran erkannt werden kann, dass der Wicklungsstrom Iv den Wert 0 erreicht.

In Schritt S40 wird die Klemmenspannung Uv gemessen, wobei der Zeitpunkt dieser Messung innerhalb der oben beschriebenen Messfenster Tm1 und Tm2 liegt. Im darauffolgenden Schritt S50 wird der Zähler Zrf, welcher die Anzahl der Messungen bei steigender Flanke der Gegen-EMK anzeigt, z.B. um 1 inkrementiert.

In Schritt S60 wird die gemessene Klemmenspannung Uv mit einem Schwellwert Uv_th verglichen. Ist Uv größer als Uv_th, so bedeutet dies, dass die Gegen-EMK in ihrer steigenden Flanke Null überschritten hat bzw. einen Nulldurchgang hatte, und das Verfahren schreitet fort zu Schritt S70. Anderenfalls springt das Verfahren zurück zu Schritt S40 und die Messung wird wiederholt. Auf Basis des festgestellten Nulldurchgangs der Gegen-EMK kann beispielsweise der Zeitpunkt der nächsten Kommutierung festgelegt werden.

Der nächste Nulldurchgang der Gegen-EMK wird an der fallenden Flanke festgestellt. Hierzu wird in Schritt S70 abgewartet, dass die Demagnetisierung nach der vierten Kommutierung abgeschlossen ist, was z.B. daran erkannt werden kann, dass der Wicklungsstrom Iv den Wert 0 erreicht bzw. unterschreitet.

In Schritt S80 wird die Klemmenspannung Uv gemessen, und im darauffolgenden Schritt S90 wird der Zähler Zff, welcher die Anzahl der Messungen bei fallender Flanke der Gegen-EMK anzeigt, um z.B. 1 inkrementiert.

In Schritt S100 wird die gemessene Klemmenspannung Uv mit einem Schwellwert Uv_th verglichen. Ist Uv kleiner als Uv_th, so bedeutet dies, dass die Gegen-EMK Null unterschritten hat bzw. einen Nulldurchgang hatte, und das Verfahren schreitet fort zu Schritt S110. Anderenfalls springt das Verfahren zurück zu Schritt S80 und die Messung wird wiederholt. Auf Basis des festgestellten Nulldurchgangs der Gegen-EMK wird beispielsweise der Zeitpunkt der nächsten Kommutierung festgelegt.

In Schritt S110 werden die Zählwerte Zrf und Zff zur Summe Zsum aufaddiert. Der Wert von Zsum entspricht somit der Anzahl von Messungen der Klemmenspannung Uv, welche für die elektromotorische Kraft des Elektromotors indikativ ist, innerhalb einer elektrischen Periode T. Es ist auch möglich, die Zählwerte Zrf und Zff unter Vornahme einer Wichtung in einem bestimmten Verhältnis aufzuaddieren, also beispielsweise die Zählwerte Zrf der steigenden Flanke stärker zu berücksichtigen. Somit ist es möglich, qualitative Unterschiede in den Messungen bei steigender und fallender Flanke zu berücksichtigen.

Im Schritt S120 wird der Wert Zsum mit einem ersten Grenzwert Zth, welcher im vorliegenden Beispiel 3 beträgt, verglichen. Ist Zsum kleiner als der erste Grenzwert Zth, dann springt das Verfahren zu Schritt S130, anderenfalls springt es zu Schritt S140.

In Schritt S130 wird der Ereignisauftrittszähler Zevent um 1 inkrementiert. Dieser Ereignisauftrittszähler Zevent zählt, wie oft weniger als die kritische Anzahl von Messungen während einer elektrischen Periode durchgeführt wird. Ist dagegen Zsum nicht kleiner als der erste Grenzwert Zth, also nicht kleiner als 3, dann wird der Ereignisauftrittszähler Zevent in Schritt S140 auf Null zurückgesetzt.

In Schritt S150 wird der Ereignisauftrittszähler Zevent mit einem zweiten Grenzwert Zth2, z.B. 4, verglichen. Ist Zevent größer als der zweiter Grenzwert Zth2, dann springt das Verfahren zu Schritt S160, anderenfalls springt es zu Schritt S170.

In Schritt S160 wird die maximal zulässige Drehzahl Nmax reduziert, z.B. indem der aktuelle Wert Nmax um einen vorbestimmten Wert von z.B. 50 U/min reduziert wird.

In Schritt S170 wird die die maximal zulässige Drehzahl Nmax unter bestimmten Voraussetzungen inkrementiert. Eine mögliche Bedingung für das Inkrementieren ist, dass der Ereignisauftrittszähler Zevent für ein bestimmtes Zeitintervall gleich Null ist. Eine weitere mögliche Bedingung ist, dass die, gegebenenfalls gemittelte, Summe Zsum der beiden Messzähler Zrf und Zff einen Grenzwert erreicht, der höher als der Grenzwert 3 ist. Somit wird für die Erhöhung der Drehzahl eine Hysterese festgelegt, die einen stabileren Betrieb ermöglicht. Eine weitere mögliche Bedingung ist, dass die maximal zulässige Drehzahl Nmax eine unter günstigsten Bedingungen physikalisch mögliche Drehzahl des Elektromotors nicht übersteigen darf. Noch eine mögliche Bedingung ist, dass die maximal zulässige Drehzahl Nmax nicht mehr als einen bestimmten, ggf. drehzahlabhängigen Wert größer ist als die momentane tatsächliche Drehzahl. Es ist auch möglich, die vorgenannten Bedingungen miteinander zu kombinieren. Ebenso ist es auch möglich, dass auch die Verringerung der maximal zulässigen Drehzahl Nmax nur nach Ablauf eines vorbestimmten Zeitintervalls durchgeführt wird.

Nach Schritt S160 bzw. S170 springt das Verfahren zurück zu Schritt S20 und die Messungen der EMK werden erneut durchgeführt.

Mit dem oben beschriebenen Verfahren erfolgt eine dynamische Anpassung der maximal zulässigen Drehzahl Nmax an die momentanen Lastbedingungen. Wird beispielsweise die tatsächliche Drehzahl N kontinuierlich gesteigert, dann verkleinert sich die elektrische Periode T, und somit auch das Messfenster Tm1 während dessen die Messung vorzunehmen ist. Durch das oben beschriebene Verfahren wird sichergestellt, dass eine bestimmte Mindestanzahl von Messungen, im vorliegenden Beispiel 3 Messungen, pro elektrischer Periode durchgeführt wird. Als Kippkriterium ist also hier festgelegt, dass die Anzahl der Messungen weniger als 3 beträgt. Ist dieses Kippkriterium gegeben, dann wird die maximal zulässige Drehzahl Nmax solange zurückgenommen, bis das Kippkriterium nicht mehr gegeben ist. Auf diese Weise kann der Antrieb den Lastverhältnissen angepasst werden und die tatsächliche Drehzahl kann an die physikalisch mögliche Grenze herangefahren werden. Somit wird der Drehzahlbereich ausgedehnt, wobei gleichzeitig sichergestellt wird, dass der Motor nicht kippt bzw. instabil wird.

Im oben beschriebenen Verfahren werden die Messungen bei steigender und fallender Flanke der Gegen-EMK mit separaten Zählern gezählt, was eine gewichtete Summation ermöglicht, es ist jedoch auch möglich, die Anzahl der Messungen mit nur einem einzigen Zähler zu zählen.

Bezugszeichenliste:

    100 Elektromotor
    110 Spannungsversorgung
    120 Wechselrichterbrücke
    130U, 130V, 130W Wicklungsstränge
    140 Sternpunkt
    150 Widerstand
    160 Motorsteuerung
    Iu, Iv, Iw Wicklungsströme
    Uu, Uv, Uw Klemmenspannungen
    T elektrische Periode
    Tm1, Tm2 Messfenster
    X1 ... X6 Steuersignale
    Z0, Z_cm, Z_delay, Z_trigger_vm, Z_vm, Z_max Zählwerte

**Patentansprüche**

1.  Verfahren zur Anpassung eines Drehzahlbereichs eines Elektromotors (100) bis zu einer physikalisch maximal möglichen Drehzahl **gekennzeichnet durch** die folgenden Schritte:

    - Durchführen einer Anzahl von Messungen einer Messgröße (Uv), die für eine elektromotorische Kraft (Ev) des Elektromotors (100) indikativ ist, innerhalb einer vorbestimmten Zeitdauer;
    - Ermitteln der Anzahl (Zsum) der innerhalb der vorbestimmten Zeitdauer vorgenommenen Messungen,
    - Anpassen eines Zählwerts (Zevent) in Abhängigkeit von der ermittelten Anzahl (Zsum), und
    - Anpassen einer maximal zulässigen Drehzahl (Nmax) des Elektromotors (100) in Abhängigkeit von Zählwert (Zevent).

2.  Verfahren nach Anspruch. 1, **dadurch gekenn-**

**zeichnet, dass** die Messungen der Messgröße (Uv) jeweils innerhalb der vorbestimmten Zeitdauer durchgeführt werden, bis ein Kriterium zur Erkennung eines Nulldurchgangs der elektromotorischen Kraft (Ev) erfüllt ist.

3.  Verfahren nach Anspruch 1 oder 2, **dadurch gekennzeichnet, dass** das das Verfahren ferner folgende Schritte aufweist:

    - Inkrementieren des Zählwerts (Zevent) eines Ereignisauftrittzählers, falls die ermittelte Anzahl (Zsum) von Messungen einen ersten Grenzwert (Zth1) unterschreitet,
    - Dekrementieren oder Zurücksetzen des Zählwerts (Zevent) des Ereignisauftrittzählers, falls die ermittelte Anzahl (Zsum) von Messungen den ersten Grenzwert (Zth1) überschreitet, und
    - Anpassen der maximal zulässigen Drehzahl (Nmax) in Abhängigkeit vom Zählwert (Zevent) des Ereignisauftrittzählers.

4.  Verfahren nach Anspruch 3, **dadurch gekennzeichnet, dass** die maximal zulässige Drehzahl (Nmax) reduziert wird, falls der Zählwert (Zevent) des Ereignisauftrittzählers einen zweiten Grenzwert (Zth2) überschreitet.

5.  Verfahren nach Anspruch 3 oder 4, **dadurch gekennzeichnet, dass** die maximal zulässige Drehzahl (Nmax) vergrößert wird, falls der Zählwert (Zevent) des Ereignisauftrittzählers einen zweiten Grenzwert (Zth2) nicht überschreitet.

6.  Verfahren nach Anspruch 5, **dadurch gekennzeichnet, dass** die maximal zulässige Drehzahl (Nmax) nur unter der weiteren Bedingung vergrößert wird, dass die ermittelte Anzahl (Zsum) von Messungen einen dritten Grenzwert überschreitet, der größer ist als der erste Grenzwert (Zth1).

7.  Verfahren nach Anspruch 5 oder 6, **dadurch gekennzeichnet, dass** die maximal zulässige Drehzahl (Nmax) nur unter der Bedingung vergrößert wird, dass der Zählwert (Zevent) des Ereignisauftrittzählers den zweiten Grenzwert (Zth2) für eine vorgegebene Zeitdauer nicht überschreitet.

8.  Verfahren nach einem der vorhergehenden Ansprüche, **dadurch gekennzeichnet, dass** die Messgröße (Uv) eine Klemmenspannung des Elektromotors (100) ist.

9.  Verfahren nach einem der vorhergehenden Ansprüche, **dadurch gekennzeichnet, dass** der Elektromotor (100) als Synchronmotor, insbesondere als bürstenloser Gleichstrommotor ausgebildet ist.

**10.** Verfahren nach einem der vorhergehenden Ansprüche, **dadurch gekennzeichnet, dass** die vorbestimmte Zeitdauer einer elektrischen Periode (T) des Elektromotors (100) entspricht.

**11.** Verfahren nach einem der Ansprüche 1 bis 9, **dadurch gekennzeichnet, dass** die vorbestimmte Zeitdauer mindestens einem Messfenster (Tm1) zwischen Demagnetisierung und Kommutierung eines Wicklungsstrangs (130) des Elektromotors (100) entspricht.

**12.** Verfahren nach einem der vorhergehenden Ansprüche, **dadurch gekennzeichnet, dass** die Anzahl der Messungen zur Erkennung des Nulldurchgangs einer steigenden Flanke der Gegen-EMK und die Anzahl der Messungen zur Erkennung des Nulldurchgangs einer fallenden Flanke der Gegen-EMK mit separaten Zählern gezählt werden, deren Zählwerte (Zrf, Zff) anschließend aufsummiert werden.

**13.** Verfahren nach Anspruch 12, **dadurch gekennzeichnet, dass** die Zählwerte (Zrf, Zff) der Zähler gewichtet summiert werden.

**14.** Verfahren nach einem der vorhergehenden Ansprüche, **dadurch gekennzeichnet, dass** die elektromotorischen Kraft (Ev) eine bei Drehung des Elektromotors (100) induzierte Gegen-EMK ist.

**15.** Vorrichtung zur Anpassung eines Drehzahlbereichs eines Elektromotors (100) bis zu einer physikalisch maximal möglichen Drehzahl, welche eingerichtet ist,

    - eine Anzahl von Messungen einer Messgröße (Uv), die für eine elektromotorische Kraft (Ev) des Elektromotors (100) indikativ ist, innerhalb einer vorbestimmten Zeitdauer durchzuführen;
    - die Anzahl (Zsum) der innerhalb der vorbestimmten Zeitdauer vorgenommenen Messungen zu ermitteln,
    - einen Zählwert (Zevent) in Abhängikeit von der ermittellten Anzahl (Zsum) anzupassen, und
    - eine maximal zulässigen Drehzahl (Nmax) des Elektromotors (100) in Abhängigkeit vom Zählwert (Zevent) anzupassen.

**16.** Elektromotor aufweisend eine Vorrichtung nach Anspruch 14.

**Claims**

**1.** Method for adjusting a speed range of an electric motor (100) up to a physically maximum possible speed, **characterised by** the following steps:

    - implementing a number of measurements of a measured variable (Uv), which is indicative of an electromotive force (Ev) of the electric motor (100) within a predetermined period of time;
    - determining the number (Zsum) of measurements performed within the predetermined period of time,
    - adjusting a counter value (Zevent) as a function of the determined number (Zsum) and
    - adjusting a maximum permissible speed (Nmax) of the electric motor (100), as a function of the counter value (Zevent).

**2.** Method according to claim 1, **characterised in that** the measurements of the measured variable (Uv) are implemented in each case within the predetermined period of time, until a criterion for identifying a zero-crossing of the electromotive force (Ev) is fulfilled.

**3.** Method according to claim 1 or 2, **characterised in that** the method further comprises the following steps:

    - incrementing the counter value (Zevent) of an event counter, if the determined number (Zsum) of measurements does not reach a first limit value (Zth1),
    - decrementing or resetting the counter value (Zevent) of the event counter if the determined number (Zsum) of measurements exceeds the first limit value (Zth1), and
    - adjusting the maximum permissible speed (Nmax) as a function of the counter value (Zevent) of the event counter.

**4.** Method according to claim 3, **characterised in that** the maximum permissible speed (Nmax) is reduced if the counter value (Zevent) of the event counter exceeds a second limit value (Zth2).

**5.** Method according to claim 3 or 4, **characterised in that** the maximum permissible speed (Nmax) is increased if the counter value (Zevent) of the event counter does not exceed a second limit value (Zth2).

**6.** Method according to claim 5, **characterised in that** the maximum permissible speed (Nmax) is only increased on the further condition that the determined number (Zsum) of measurements exceeds a third limit value, which is greater than the first limit value (Zth1).

**7.** Method according to claim 5 or 6, **characterised in that** the maximum permissible speed (Nmax) is only increased on the condition that the counter value (Zevent) of the event counter does not exceed the second limit value (Zth2) for a predetermined period of time.

8. Method according to one of the preceding claims, **characterised in that** the measured variable (Uv) is a terminal voltage of the electric motor (100).

9. Method according to one of the preceding claims, **characterised in that** the electric motor (100) is embodied as a synchronous motor, in particular as a brushless direct current motor.

10. Method according to one of the preceding claims, **characterised in that** the predetermined period of time corresponds to an electrical period (T) of the electric motor (100).

11. Method according to one of claims 1 to 9, **characterised in that** the predetermined period of time at least corresponds to a measurement window (Tm1) between the demagnetisation and commutation of a winding phase (130) of the electric motor (100).

12. Method according to one of the preceding claims, **characterised in that** the number of measurements for identifying the zero-crossing of a rising edge of the counter electromotive force (cemf) and the number of measurements for identifying the zero-crossing of a falling edge of the cemf are counted with separate counters, the counter values (Zrf, Zff) of which are then added up.

13. Method according to claim 12, **characterised in that** the counter values (Zrf, Zff) of the counters are added up weighted.

14. Method according to one of the preceding claims, **characterised in that** the electromotive force (Ev) is a cemf induced upon rotation of the electric motor (100).

15. Apparatus for adjusting a speed range of an electric motor (100) up to a physically maximum possible speed, which is set up

     - to implement a number of measurement of a measured variable (Uv), which is indicative of an electromotive force (Ev) of the electric motor (100), within a predetermined period of time;
     - to determine the number (Zsum) of measurements performed within the predetermined period of time
     - to adjust a counter value (Zevent) as a function of the determined number (Zsum), and
     - to adjust a maximum permissible speed (Nmax) of the electric motor (100) as a function of the counter value (Zevent).

16. Electric motor comprising an apparatus according to claim 14.

## Revendications

1. Procédé d'ajustement d'une plage de régime d'un moteur électrique (100) jusqu'à un régime maximal physiquement possible, **caractérisé par** les étapes suivantes consistant à :

     - réaliser un certain nombre de mesures d'une grandeur (Uv), indicative d'une force électromotrice (Ev) du moteur électrique (100), à l'intérieur d'une durée prédéterminée ;
     - déterminer le nombre (Zsum) de mesures effectuées à l'intérieur de la durée prédéterminée,
     - ajuster une valeur de comptage (Zevent) en fonction du nombre (Zsum) déterminé, et
     - ajuster un régime maximal autorisé (Nmax) du moteur électrique (100) en fonction de la valeur de comptage (Zevent).

2. Procédé selon la revendication 1, **caractérisé en ce que** les mesures des grandeurs (Uv) sont mises en oeuvre respectivement à l'intérieur de la durée prédéterminée, jusqu'à ce qu'un critère permettant une détection d'un passage par zéro de la force électromotrice (Ev) soit satisfait.

3. Procédé selon la revendication 1 ou 2, **caractérisé en ce que** ledit procédé présente en outre les étapes suivantes consistant à :

     - incrémenter la valeur de comptage (Zevent) d'un compteur d'événements, dans le cas où le nombre (Zsum) déterminé de mesures est inférieur à une première valeur limite (Zth1),
     - décrémenter ou réduire la valeur de comptage (Zevent) du compteur d'événements, dans le cas où le nombre (Zsum) déterminé de mesures est supérieur à la première valeur limite (Zth1), et
     - ajuster le régime maximal autorisé (Nmax) en fonction d'une valeur de comptage (Zevent) du compteur d'événements.

4. Procédé selon la revendication 3, **caractérisé en ce que** le régime maximal autorisé (Nmax) est réduit dans le cas où la valeur de comptage (Zevent) du compteur d'événements est supérieur à une deuxième valeur limite (Zth2).

5. Procédé selon la revendication 3 ou 4, **caractérisé en ce que** le régime maximal autorisé (Nmax) est augmenté dans le cas où la valeur de comptage (Zevent) du compteur d'événements n'est pas supérieur à une deuxième valeur limite (Zth2).

**6.** Procédé selon la revendication 5, **caractérisé en ce que** le régime maximal autorisé (Nmax) n'est augmenté que sous la condition supplémentaire que le nombre (Zsum) déterminé de mesures soit supérieur à une troisième valeur limite plus grande que la première valeur limite (Zth1).

**7.** Procédé selon la revendication 5 ou 6, **caractérisé en ce que** le régime maximal autorisé (Nmax) n'est augmenté que sous la condition que la valeur de comptage (Zevent) du compteur d'événements ne soit pas supérieur à la deuxième valeur limite (Zth2) pour une durée spécifiée.

**8.** Procédé selon l'une quelconque des revendications précédentes, **caractérisé en ce que** la grandeur (Uv) est une tension aux bornes du moteur électrique (100).

**9.** Procédé selon l'une quelconque des revendications précédentes, **caractérisé en ce que** le moteur électrique (100) est conçu en tant que moteur synchrone, en particulier en tant que moteur à courant continu sans balais.

**10.** Procédé selon l'une quelconque des revendications précédentes, **caractérisé en ce que** la durée prédéterminée correspond à une période électrique (T) du moteur électrique (100).

**11.** Procédé selon l'une quelconque des revendications 1 à 9, **caractérisé en ce que** la durée prédéterminée correspond au moins à une fenêtre de mesure (Tm1) entre une démagnétisation et une commutation d'un faisceau de bobinage (130) du moteur électrique (100).

**12.** Procédé selon l'une quelconque des revendications précédentes, **caractérisé en ce que** le nombre des mesures permettant une détection du passage par zéro d'un flanc ascendant de la force contre-électromotrice et le nombre des mesures permettant une détection du passage par zéro d'un flanc descendant de la force contre-électromotrice sont comptés avec des compteurs séparés, dont les valeurs de comptage (Zrf, Zff) sont ensuite additionnés.

**13.** Procédé selon la revendication 12, **caractérisé en ce que** les valeurs de comptage (Zrf, Zff) des compteurs sont additionnées avec une pondération.

**14.** Procédé selon l'une quelconque des revendications précédentes, **caractérisé en ce que** la force électromotrice (Ev) est une force contre-électromotrice induite par une rotation du moteur électrique (100).

**15.** Dispositif permettant un ajustement d'une plage de régime d'un moteur électrique (100) jusqu'à un régime maximal physiquement possible, destiné à

- réaliser un certain nombre de mesures d'une grandeur (Uv), indicative d'une force électromotrice (Ev) du moteur électrique (100), à l'intérieur d'une durée prédéterminée ;
- déterminer le nombre (Zsum) de mesures effectuées à l'intérieur de la durée prédéterminée,
- ajuster une valeur de comptage (Zevent) en fonction du nombre (Zsum) déterminé, et
- ajuster un régime maximal autorisé (Nmax) du moteur électrique (100) en fonction de la valeur de comptage (Zevent).

**16.** Moteur électrique présentant un dispositif selon la revendication 14.

# Fig. 1

EP 2 583 379 B1

# Fig. 2

13

# Fig. 3

# Fig. 4

## Fig. 5

```
                    ┌─────────┐
                    │  Start  │
                    └────┬────┘
                         ↓
S10 ─┐         ┌──────────────────┐              ┌───┐
     └────────→│ Nmax = 2000 U/min│              │ A │
               └────────┬─────────┘              └───┘
                        ↓←─────────────────────────
S20 ─┐         ┌──────────────────┐
     └────────→│  Zrf = 0   Zff = 0│
               │     Zevent = 0    │
               └────────┬─────────┘
                        ↓←─────────────┐
S30 ─┐              ╱─────────╲    n   │
     └────────────→│  lv ≥ 0 ? │──────→│
                    ╲─────────╱        │
                        │ j            │
S40 ─┐         ┌──────────────────┐    │
     └────────→│                  │    │
               └────────┬─────────┘    │
S50 ─┐         ┌──────────────────┐    │
     └────────→│   Zrf = Zrf + 1  │    │
               └────────┬─────────┘    │
S60 ─┐              ╱─────────╲    n   │
     └────────────→│ Uv > Uv_th?│──────┘
                    ╲─────────╱
                        │ j ←────────────┐
S70 ─┐              ╱─────────╲    n     │
     └────────────→│  lv ≤ 0 ? │────────→│
                    ╲─────────╱          │
                        │ j              │
S80 ─┐         ┌──────────────────┐      │
     └────────→│                  │      │
               └────────┬─────────┘      │
S90 ─┐         ┌──────────────────┐      │
     └────────→│   Zff = Zff + 1  │      │
               └────────┬─────────┘      │
S100 ─┐             ╱─────────╲     n    │
      └───────────→│ Uv < Uv_th?│────────┘
                    ╲─────────╱
                        │ j
S110 ─┐        ┌──────────────────┐
      └───────→│  Zsum = Zrf + Zff│
               └────────┬─────────┘
                        ↓
S120 ─┐             ╱─────────╲
      └────────────│ Zsum<Zth 1│
                 j  ╲─────────╱  n
          ↓                        ↓
S130 ─┐ ┌────────────────┐  ┌────────────┐ ┌─ S140
      └→│Zevent = Zevent+1│  │ Zevent = 0 │←┘
        └────────┬───────┘  └──────┬─────┘
                 └──────┬──────────┘
                        ↓
S150 ─┐             ╱─────────╲
      └────────────│Zevent>Zth2│
                 j  ╲─────────╱  n
          ↓                        ↓
S160 ─┐  ┌──────────┐      ┌──────────┐ ┌─ S170
      └─→│  Nmax--  │      │  Nmax++  │←┘
         └────┬─────┘      └────┬─────┘
              └───────┬─────────┘
                      ↓
                   ┌─────┐
                   │  A  │
                   └─────┘
```

15

**IN DER BESCHREIBUNG AUFGEFÜHRTE DOKUMENTE**

**In der Beschreibung aufgeführte Patentdokumente**

- DE 60124121 T2
- DE 69936222 T2
- DE 69803885 T2
- US 6184645 B1
- US 4866356 A
- JP 6307905 A
- EP 1109309 A2